(19) Europäisches Patentamt
European Patent Office
Office européen des brevets

(11) EP 4 488 338 A1

(12) **EUROPEAN PATENT APPLICATION**
published in accordance with Art. 153(4) EPC

(43) Date of publication:
**08.01.2025 Bulletin 2025/02**

(21) Application number: **23759982.4**

(22) Date of filing: **21.02.2023**

(51) International Patent Classification (IPC):
***C08L 101/08** (2006.01)* ***B28B 1/30** (2006.01)*
***C04B 24/26** (2006.01)* ***C04B 28/02** (2006.01)*
***B33Y 70/10** (2020.01)*

(52) Cooperative Patent Classification (CPC):
**B28B 1/30; B33Y 70/10; C04B 24/26; C04B 28/02; C08L 101/08**

(86) International application number:
**PCT/JP2023/006248**

(87) International publication number:
**WO 2023/162981 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029627**

(71) Applicant: **Nippon Shokubai Co., Ltd.**
**Osaka-shi, Osaka 541-0043 (JP)**

(72) Inventors:
- **YOKOYAMA, Yuki**
  **Suita-shi, Osaka 564-0034 (JP)**
- **TAKAYAMA, Takeshi**
  **Suita-shi, Osaka 564-0034 (JP)**
- **ARAI, Taichiro**
  **Suita-shi, Osaka 564-0034 (JP)**
- **OSAWA, Masami**
  **Suita-shi, Osaka 564-0034 (JP)**

(74) Representative: **Crow, Martin et al**
**Venner Shipley LLP**
**200 Aldersgate**
**London EC1A 4HD (GB)**

# (54) ADDITIVE USED IN HYDRAULIC COMPOSITION FOR ADDITIVE MANUFACTURING

(57) To provide an additive and the like excellent in the effect of improving the laminatability of an additive manufacturing hydraulic composition, and the like. Provided is an additive used in an additive manufacturing hydraulic composition, the additive containing an emulsion containing a polymer having an acid value of 30 mgKOH/g or more. The additive more preferably contains an emulsion containing a polymer having an acid value of 100 to 400 mgKOH/g, and the polymer preferably includes a structural unit having a carboxyl group.

EP 4 488 338 A1

## Description

### TECHNICAL FIELD

The present invention relates to a technique for producing a hydraulic composition for an additive manufacturing, and particularly to an additive agent used in a hydraulic composition for an additive manufacturing.

### BACKGROUND ART

In recent years, additive manufacturing (3D printing) techniques have been utilized for manufacturing models and parts in manufacturing industries and the like. When the techniques are classified, stereolithography (a method of curing and laminating an ultraviolet curable resin layer one by one), an inkjet method (a method of irradiating an ultraviolet curable resin with ultraviolet rays while injecting the ultraviolet curable resin from a printer head and laminating the ultraviolet curable resin), powder gypsum molding (a method of injecting a resin or paste from a printer head to solidify powder gypsum), powder sintering molding (a method of baking and solidifying a resin or a metal powder with a laser to laminate the resin or the metal powder), and thermal fusion additive manufacturing (a method of ejecting a thermoplastic resin melted by heat from a thin nozzle and laminating the thermoplastic resin) are known. A shaped article is mainly a resin, gypsum, and a metal, and studies on a technique for forming a large shaped article such as a construction member using a hydraulic material composition are progressing in overseas rather than in Japan. In Europe, the United States, and China, large-sized shaped articles at the level of detached houses have already been manufactured as automatic construction work machines.

As a technique related to additive manufacturing or the like using a hydraulic composition, for example, the following Patent Literatures 1 to 5 have been introduced.

Patent Literature 1 discloses a technique in which three-dimensional data created by a computer is cut at a predetermined thickness to create two-dimensional slice data, a mortar added and mixed with a set accelerating agent on a bed (table) is sprayed while a spray nozzle is controlled to move in vertical and horizontal directions based on the two-dimensional slice data, the sprayed mortar is autonomously cured to form a solidified layer having a shape based on the two-dimensional slice data, and the operation of forming the solidified layer is repeated to sequentially laminate the solidified layer in the vertical direction for shaping.

In Patent Literature 2, a material for making a mold for producing ferrous castings in a 3D printer is introduced, and a material including cement, sand, and a water-soluble silicate as an accelerator is disclosed.

In Patent Literature 3, a grout composition using a lignin sulfonic acid-based dispersant and a melamine sulfonic acid-based dispersant in combination as a hydraulic material composition is introduced.

In Patent Literature 4, a PC grout material is introduced as a material using a dispersant and a thickener in combination.

In Patent Literature 5, a method for producing a hydraulic composition for additive manufacturing using an ionic emulsion type thickener is known.

The hydraulic composition for additive manufacturing (3D printing) needs to have reduced fluidity in order to exhibit laminatability. When the fluidity of the hydraulic material composition is reduced, movement in the hose is hindered, and thus a curing accelerator is usually added immediately before discharge to reduce the fluidity. On the other hand, regarding the laminatability itself, it is currently considered that there are not a few problems to be solved in order to further spread construction by additive manufacturing.

Citation List

Patent Literatures

Patent Literature 1: JP H10-235623 A

Patent Literature 2: US Patent No. 8211226

Patent Literature 3: JP 2008-247677 A

Patent Literature 4: JP 2006-290694 A

Patent Literature 5: JP 2021-133667 A

## SUMMARY OF INVENTION

Technical Problem

The present invention provides an additive agent and the like excellent in the effect of improving the laminatability of a hydraulic composition for additive manufacturing, and the like.

Solution to Problem

The present inventors have conducted intensive studies, and as a result, have found that the addition of an emulsion containing a specific polymer is excellent in the performance of improving the laminatability of a hydraulic composition. The present inventors have completed the following present invention based on the findings.

Preferred configurations of the additive agent and the like of the present invention are described in the following (1) to (9) and the like.

(1) An additive agent used in a hydraulic composition for an additive manufacturing, containing an emulsion containing a polymer having an acid value of 30 mgKOH/g or more.

(2) The additive agent according to (1), containing an emulsion containing a polymer having an acid value of 100 to 400 mgKOH/g.

(3) The additive agent according to (1) or (2), wherein the polymer includes a structural unit having a carboxyl group.

(4) The additive agent according to (3), wherein the structural unit having the carboxyl group is contained in an amount of 10.0 to 60.0 parts by weight per 100 parts by weight of the polymer.

(5) The additive agent according to (3) or (4), wherein the polymer is a copolymer further having a hydrophobic structural unit.

(6) The additive agent according to (5), wherein the hydrophobic structural unit is contained in an amount of 40.0 to 90.0 parts by weight per 100 parts by weight of the polymer.

(7) The additive agent according to any one of (1) to (6), wherein a viscosity at a shear rate of 10 $s^{-1}$ at room temperature when the emulsion is adjusted to a concentration of 25 mass% is 250 mPa·s or less.

(8) A hydraulic composition for an additive manufacturing containing the additive agent according to any one of (1) to (7) and a hydraulic composition.

(9) A method for producing a hydraulic composition for an additive manufacturing, the method including:

(a) a step of stirring a hydraulic material, an aggregate, and water to obtain a hydraulic composition; and

(b) a step of adding and stirring the additive agent according to any one of (1) to (7) after the step (a).

(10) An additive manufacturing method using a hydraulic composition added with the additive agent according to any one of (1) to (7).

## DESCRIPTION OF EMBODIMENTS

Hereinafter, the matters related to an additive agent and the like of the present invention will be described in detail. However, the following description is an example for describing the present invention, and it is not intended to particularly limit the present invention only to this description range. Any combination of two or three or more preferred embodiments of the present invention to be described below is also a preferred embodiment of the present invention, and is considered to be disclosed in the present specification (that is, it is a legitimate basis for the amendment).

In the present specification, the phrase "X to Y" indicating a range means "X or more and Y or less", and unless otherwise specified, operations and measurements of physical properties and the like are performed under conditions of room temperature (20 to 25°C)/relative humidity of 45 to 55% RH. In the present specification, the expression "(meth)acryl" means "acryl and/or methacryl", and the expression "(meth)acrylate" means "acrylate and/or methacrylate". Moreover,

the terms "weight" and "mass", "parts by weight" and "parts by mass", and "wt%" and "mass%" are treated as synonyms for each other.

An embodiment of the present invention is an additive agent used in a hydraulic composition for additive manufacturing, and the additive agent contains an emulsion containing a polymer having an acid value of 30 mgKOH/g or more. Hereinafter, the above-described additive agent is also referred to as the additive agent in the present invention or the additive agent of the present invention. The polymer having an acid value of 30 mgKOH/g or more is also simply referred to as the polymer in the present invention or the polymer of the present invention.

The additive agent of the present invention is excellent in the effect of improving the laminatability of a hydraulic composition for additive manufacturing. Here, the laminatability can be grasped by, for example, physical properties of fluidity after addition of the additive agent and can be evaluated by flow measurement. The favorable laminatability means that a flow value is 150 mm or less in the flow evaluation under the conditions described in Examples described below. The additive agent of the present invention can remarkably reduce the flow value even when the amount of the additive agent added is small.

Since a curing time of the "additive manufacturing" hydraulic composition needs to be shorter than that of a normal hydraulic composition, an additive agent as a curing agent is required. However, when the curing time is extremely fast, a mortar or the like is cured before the next layer is discharged at the time of performing additive manufacturing, and the adhesion between the layer for which discharge has been completed and the newly laminated layer may decrease, leading to a decrease in strength as a structure. Therefore, the favorable laminatability indicates that the time to cure the hydraulic composition is sufficiently ensured.

One feature of the polymer of the present invention is that the acid value is 30 mgKOH/g or more. When the acid value is 30 mgKOH/g or more, the fluidity of the added hydraulic composition is reduced, and the laminatability is excellent. One feature of the additive agent of the present invention is to contain a polymer as an emulsion. In the case of an emulsion, since the viscosity can be reduced, handleability is improved.

(Additive agent)

The additive agent of the present invention is used in a hydraulic composition for additive manufacturing. It is desirable that the additive agent of the present invention is kneaded with a hydraulic composition and used as a hydraulic composition for additive manufacturing.

More specifically, the additive agent of the present invention contains an emulsion containing a polymer having an acid value of 30 mgKOH/g or more. In another embodiment, the additive agent includes an emulsion containing a polymer having an acid value of 30 mgKOH/g or more. Hereinafter, the polymer having an acid value of 30 mgKOH/g or more is also simply referred to as the polymer in the present invention or the polymer of the present invention.

The additive agent of the present invention can be used as a thickener or a laminatability improver by more specifically limiting the use application. Specifically, the additive agent may be a thickener for a hydraulic composition, containing an emulsion containing a polymer having an acid value of 30 mgKOH/g or more, or may be a laminatability improver for a hydraulic composition, containing an emulsion containing a polymer having an acid value of 30 mgKOH/g or more.

As a specific method of using the additive agent of the present invention, for example, the additive is added to a mortar for additive manufacturing or a hydraulic composition such as fresh concrete and the mixture is stirred.

(Additive manufacturing)

In the present invention, the "additive manufacturing" refers to a technique for manufacturing a molded body having an arbitrary shape by laminating cross-sectional shapes based on three-dimensional data without using a dedicated tool such as a mold. The "additive manufacturing" may also be commonly referred to as "3D printing", "stereolithography", or "rapid prototyping".

(Hydraulic composition for additive manufacturing)

In the present invention, the "hydraulic composition for additive manufacturing" refers to a hydraulic composition used for additive manufacturing. The hydraulic composition for additive manufacturing contains the additive agent of the present invention and a hydraulic composition. The hydraulic composition contains a hydraulic material and water, preferably a hydraulic material, an aggregate (coarse aggregate and/or fine aggregate), and water, and contains other components such as a dispersant and an antifoaming agent as necessary. Examples of the hydraulic composition include a mortar and fresh concrete. Another aspect of the present invention is a hydraulic composition for additive manufacturing, containing an emulsion containing a polymer having an acid value of 30 mgKOH/g or more, a hydraulic material, an aggregate, and water.

The hydraulic composition for additive manufacturing in the present invention desirably contains the additive agent of the present invention in addition to the hydraulic composition. The hydraulic composition for additive manufacturing desirably contains the additive agent of the present invention in an amount of 0.01 to 1.0 mass% in terms of a cement ratio and may be 0.01 to 0.5 mass%. Since the additive agent of the present invention is excellent in the effect of reducing the fluidity by addition in a small amount, it is sufficient that the amount of the additive added is relatively small.

(Hydraulic material)

The "hydraulic material" used in the present invention is a hydraulic substance, a pozzolanically reactive substance, or a latent hydraulic substance, preferably contains a hydraulic substance, and the hydraulic substance may be contained in an amount of 50 mass% or more (upper limit: 100 mass%), 80 mass% or more, or 90 mass% or more in the hydraulic material. When the hydraulic material contains a pozzolanically reactive substance or a latent hydraulic substance, it is desirable that the hydraulic material further contains cement (or calcium hydroxide) or a stimulant.

(Hydraulic substance)

The "hydraulic substance" in the present invention is so-called cement, and examples of the cement include portland cement (ordinary, high early strength, super high early strength, moderate heat, low heat, sulfate-resistant, and their low alkalinity type), various types of mixed cement (blast furnace cement, silica cement, fly ash cement), white portland cement, alumina cement, ultra rapid hardening cement (1 clinker-rapid hardening, 2 clinker-rapid hardening cement, magnesium phosphate cement), cement for grouting, oil well cement, low heat cement (low heat blast furnace cement, fly ash-mixed low heat blast furnace cement, high belite content cement), ultra high strength cement, cement solid material, and eco-cement (cement produced using one or more municipal waste incineration ashes and wastewater sludge incineration ashes). The cement in the present invention may be used singly or in combination of two or more kinds thereof.

The unit water amount per 1 $m^3$, the amount of cement used, and the water/cement ratio of the hydraulic composition are not particularly limited, and since the hydraulic composition is used for additive manufacturing, for example, the unit water amount, the amount of cement used, and the water/cement ratio (weight ratio) are preferably 50 to 300 $kg/m^3$, 300 to 500 $kg/m^3$, and 0.1 to 0.5, respectively.

(Pozzolanically reactive substance)

The "pozzolanically reactive substance" in the present invention is a substance that does not have hydraulic properties by itself, but gradually combines with a component (for example, calcium hydroxide produced by hydration of cement) in concrete to form an insoluble compound (for example, calcium silicate hydrate), examples thereof include natural pozzolans, fly ash, cinder ash, clinker ash, husk ash, metakaolin, and silica fume, and fly ash is preferable. Fly ash includes types I, II, III, and IV, and is preferably type II. The pozzolanically reactive substance is desirably a granular material having a particle size of 0.01 to 10 mm.

(Latent hydraulic substance)

The "latent hydraulic substance" in the present invention is a substance that does not cure simply by mixing water, but cures when a small amount of substance called a stimulant is present, and is, for example, slag (blast furnace slag, blast furnace annealing slag, steelmaking slag, and the like). The latent hydraulic substance is desirably a granular material having a particle size of 0.01 to 10 mm.

Examples of the stimulant include an aqueous solution of an alkali metal carbonate, an aqueous solution of an alkali metal fluoride, an aqueous solution of an alkali metal hydroxide, an aqueous solution of alkali metal aluminate, an aqueous solution of alkali metal silicate (for example, waterglass), and/or a mixture thereof, and the stimulant can be added to the composition containing the latent hydraulic substance in the present invention.

(Aggregate)

Examples of the aggregate used in the present invention include, in addition to pebbles (sand), crushed stone, water granulated slag, regenerated aggregates, and the like, silica stone type, clay type, zircon type, high alumina type, silicon carbide type, graphite type, chromium type, chromium-magnesium type, magnesia type refractory aggregates, and the like.

(Dispersant)

As a cement dispersant, a conventionally known cement dispersant can be used. Examples of the cement dispersant include polyalkylaryl sulfonate-based dispersants such as naphthalene sulfonate-formaldehyde condensate; melamine formalin resin sulfonate-based dispersants such as melamine sulfonate-formaldehyde condensate; aromatic aminosulfonate-based dispersants such as amino aryl sulfonic acid-phenolformaldehyde condensate; lignosulfonate-based dispersants such as salts of lignosulfonic acid and modified lignosulfonic acid; various sulfonate-based dispersants having a sulfonic acid group in a molecule such as a polystyrene sulfonate-based dispersant; copolymers obtained from a polyalkylene glycol mono(meth)acrylic acid ester-based monomer, a (meth)acrylic acid-based monomer, and a monomer copolymerizable with these monomers as described in JP S59-18338 B2 and JP H7-223852 A; various polycarboxylic acid-based dispersants having a (poly)oxyalkylene group and a carboxyl group in a molecule such as copolymers obtained from an unsaturated (poly)alkylene glycol ether-based monomer, a maleic acid-based monomer, or a (meth) acrylic acid-based monomer as described in JP H10-236858 A, JP 2001-220417 A, JP 2002-121055 A, and JP 2002-121056 A; various phosphoric acid-based dispersants having a (poly)oxyalkylene group and a phosphoric acid group in a molecule such as copolymers obtained from (alkoxy)polyalkylene glycol mono(meth)acrylate, a phosphoric acid monoester-based monomer, and a phosphoric acid diester-based monomer as described in JP 2006-52381 A, phosphoric acid-based dispersants described in JP 2008-517080 A, and the like. Among them, as the cement dispersant, a polycarboxylic acid-based dispersant is preferably used because the effect of the present invention is further exhibited. The cement dispersant may be used singly or in combination of two or more kinds thereof. A blending ratio of the cement dispersant is preferably set to, for example, 0.01 to 10 mass% per 100 mass% of the cement mass in terms of solids content.

(Antifoaming agent)

Examples of the antifoaming agent include an oxyalkylene-based defoaming agent: polyoxyalkylene alkyl ethers such as diethylene glycol heptyl ether; polyoxyalkylene acetylene ethers; (poly)oxyalkylene fatty acid esters; polyoxyalkylene sorbitan fatty acid esters; polyoxyalkylene alkyl (aryl) ether sulfuric acid ester salts; polyoxyalkylene alkyl phosphoric acid esters; polyoxyalkylene alkyl amines such as polyoxypropylene polyoxyethylene lauryl amine (propylene oxide 1 to 20 mole adduct, ethylene oxide 1 to 20 mole adduct, or the like), amine derived from a fatty acid obtained from hardened beef tallow having an alkylene oxide added thereto (propylene oxide 1 to 20 mole adduct, ethylene oxide 1 to 20 mole adduct, or the like); polyoxyalkylene amides; and the like, mineral oil-based, oil and fat-based, fatty acid-based, fatty acid ester-based, alcohol-based, amide-based, phosphoric acid ester-based, metal soap-based, and silicone-based defoaming agents.

(Polymer)

The acid value of the polymer in the present invention is 30 mgKOH/g or more, preferably 50 mgKOH/g or more, more preferably 100 mgKOH/g or more, still more preferably 150 mgKOH/g or more, and most preferably 200 mgKOH/g or more. The upper limit value of the acid value is, for example, 500 mgKOH/g or less, preferably 400 mgKOH/g or less, and more preferably 350 mgKOH/g or less. The acid value of the polymer in the present invention is preferably 30 mgKOH/g or more and 500 mgKOH/g or less, 50 mgKOH/g or more and 500 mgKOH/g or less, 100 mgKOH/g or more and 400 mgKOH/g or less, 150 mgKOH/g or more and 350 mgKOH/g or less, and 200 mgKOH/g or more and 350 mgKOH/g or less in this order.

The acid value of the polymer in the present disclosure is determined, for example, by measuring the acid value (mgKOH/g) per 1 g of the solids content of the polymer according to JIS K 0070:1992 by an automatic titrator (trade name: COM-555, manufactured by HIRANUMA Co., Ltd.).

(Structural unit having acidic functional group)

The polymer in the present invention desirably contains one or two or more kinds of structural units having an acidic functional group (also referred to as an acid group). When the polymer includes one or two or more kinds of structural units having an acidic functional group, the acid value of the polymer is easily controlled to 30 mgKOH/g or more.

Examples of the acidic functional group include a carboxyl group, sulfonic acid group, a phosphoric acid group, a phosphorus acid group, a hydroxy group, and the like, a carboxyl group, a sulfonic acid group, or a phosphoric acid group is preferable, and a carboxyl group is more preferable.

[Chemical Formula 1]

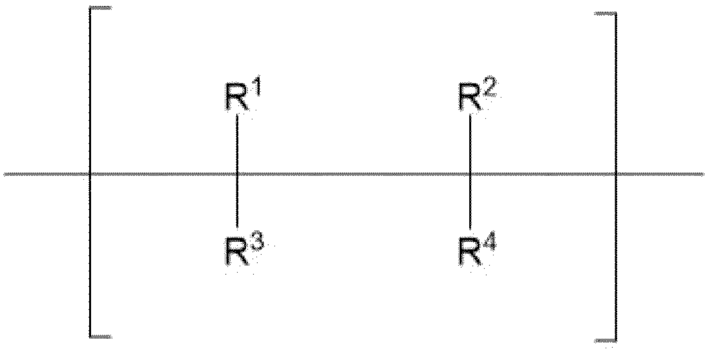

(I)

Specific examples of the structural unit having an acidic functional group include a structural unit represented by the above Formula (I).

In the above Formula (I), one or two or more of $R^1$ to $R^4$ are an acidic functional group, the other of $R^1$ to $R^4$ are the same or different and are a hydrogen atom or an unsubstituted or substituted monovalent hydrocarbon group having 1 to 8 carbon atoms.

In the above Formula (I), preferably, one or two of $R^1$ to $R^4$ are an acidic functional group, and more preferably, one of $R^1$ to $R^4$ is an acidic functional group.

Regarding $R^1$ to $R^4$ other than the acidic functional group, preferably, two or more of these is a hydrogen atom, and more preferably, all of these are a hydrogen atom, or two of these is a hydrogen atom and one of these is an alkyl group (particularly, a methyl group). The unsubstituted or substituted monovalent hydrocarbon group having 1 to 8 carbon atoms is preferably an unsubstituted monovalent hydrocarbon group having 1 to 4 carbon atoms. More specific examples of the unsubstituted monovalent hydrocarbon group include linear, branched or cyclic alkyl, alkenyl, aryl, aralkyl groups, and the like, an alkyl group is preferable, and a methyl group is particularly preferable. The substituted monovalent hydrocarbon group is one in which some or all of hydrogen atoms are substituted with a substituent, and examples of the substituent include alkoxy groups such as a methoxy group, an ethoxy group, and an (iso)propoxy group, halogen atoms such as a fluorine atom, a chlorine atom, a bromine atom, and an iodine atom, and the like.

The structural unit represented by the above Formula (I) may be a structural unit formed when a carbon-carbon double bond of an unsaturated acid-based monomer (acid group-containing monomer) is cleaved, and may further be a structural unit formed when a carbon-carbon double bond of an unsaturated carboxylic acid-based monomer is cleaved, examples of the unsaturated carboxylic acid-based monomer include acrylic acid, methacrylic acid, crotonic acid, tiglic acid, 3-methylcrotonic acid, 2-methyl-2-pentenoic acid, maleic acid, fumaric acid, itaconic acid, citraconic acid, mesaconic acid, and 2-methyleneglutaric acid, acrylic acid, methacrylic acid, maleic acid, or fumaric acid is preferable, acrylic acid or methacrylic acid is more preferable, and methacrylic acid is still more preferable. The structural unit represented by Formula (I) may be used singly or in combination of two or more different structural units.

Note that, in the present specification, the acidic functional group is in a non-neutralized state unless otherwise specified.

(Hydrophobic structural unit)

The polymer in the present invention is desirably a copolymer containing one or two or more kinds of hydrophobic structural units. When the polymer has the hydrophobic structural unit, the influence on the dispersibility on the hydraulic composition can be reduced. The hydrophobic structural unit does not have, for example, a hydrophilic functional group. The hydrophobic structural unit does not include, for example, any functional group selected from the group consisting of a carboxyl group or a salt group thereof, a sulfonic acid group or a salt group thereof, a phosphoric acid group or a salt group thereof, a phosphorus acid group or a salt group thereof, and a hydroxy group.

[Chemical Formula 2]

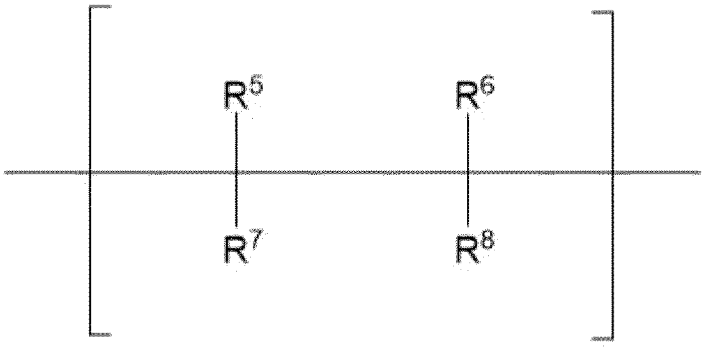

( II )

Specific examples of the hydrophobic structural unit include a structural unit represented by the above Formula (II). In the above Formula (II), $R^5$ to $R^8$ are the same or different and are a hydrogen atom, an unsubstituted or substituted monovalent hydrocarbon group having 1 to 8 carbon atoms, or $-COOM^1$ ($M^1$ is a monovalent hydrocarbon group having 1 to 8 carbon atoms), preferably, one of $R^5$ to $R^8$ is $-COOM^1$, the remaining ones of $R^5$ to $R^8$ are a hydrogen atom or an unsubstituted monovalent hydrocarbon group having 1 to 4 carbon atoms (preferably, a methyl group), more preferably, one of $R^5$ to $R^8$ is $-COOM^1$, and the remaining ones of $R^5$ to $R^8$ are a hydrogen atom.

$M^1$ is preferably a methyl group, an ethyl group, a propyl group, or a butyl group, and more preferably an ethyl group. More specific examples of the unsubstituted monovalent hydrocarbon group include linear, branched or cyclic alkyl, alkenyl, aryl, aralkyl groups, and the like, an alkyl group is preferable, and a methyl group or an ethyl group is particularly preferable. The substituted monovalent hydrocarbon group is one in which some or all of hydrogen atoms are substituted with a substituent, and examples of the substituent include alkoxy groups such as a methoxy group, an ethoxy group, and an (iso)propoxy group, and the like.

The structural unit represented by the above Formula (II) may be a structural unit formed when a carbon-carbon double bond of a hydrophobic monomer is cleaved, examples of the hydrophobic monomer include styrene, acrylic acid ester, methacrylic acid ester, and the like, acrylic acid ester, or methacrylic acid ester is preferable, acrylic acid ester is more preferable, specific examples thereof include methyl acrylate, ethyl acrylate, butyl acrylate, 2-ethylhexyl acrylate, and the like, and ethyl acrylate is particularly preferable.

[Chemical Formula 3]

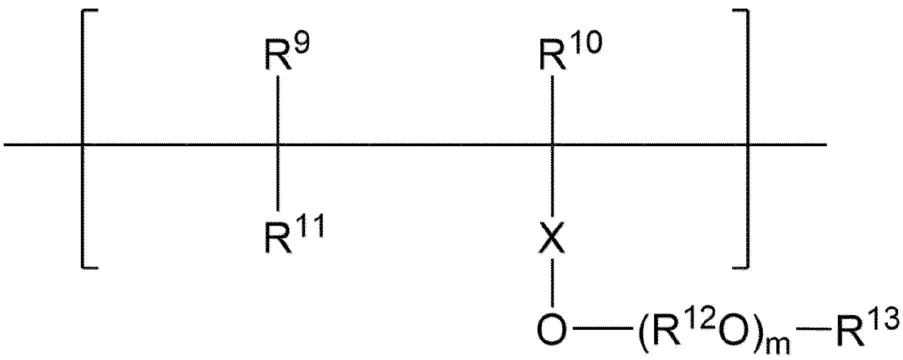

( III )

Specific examples of the hydrophobic structural unit also include a structural unit represented by the above Formula (III). In the above Formula (III), X is C=O or $(CH_2)_p$ [p is an integer of 0 to 5], $R^{12}$ is a (unsubstituted) divalent hydrocarbon group having 2 to 8 carbon atoms (at this time, $R^{12}$ may be the same or different), m is an integer of 5 to 300, $R^{13}$ is a hydrogen atom or a (unsubstituted) monovalent hydrocarbon group having 1 to 18 carbon atoms, the remaining $R^9$ to $R^{11}$ are the same or different and are a hydrogen atom or an unsubstituted or substituted monovalent hydrocarbon group having 1 to 8 carbon atoms.

p is preferably an integer of 0 to 2, and still more preferably 0. X is preferably C=O or $(CH_2)_2$ and more preferably C=O. $R^{12}$ is preferably a divalent hydrocarbon group having 2 to 4 carbon atoms, more preferably a divalent hydrocarbon group having 2 to 3 carbon atoms, and still more preferably $C_2H_4$. $R^{12}$ may be the same or different, and for example, $R^{12}O$ may have a form in which butylene oxide (BO)/propylene oxide (PO) is mixed. In this case, m refers to the sum of the addition number of moles of each alkylene oxide (for example, the sum of the addition number of moles of butylene oxide and the addition number of moles of propylene oxide). m is preferably an integer of 5 to 150, more preferably 7 to 120, and still more

preferably an integer of 8 to 90. $R^{13}$ is preferably a hydrogen atom or a monovalent hydrocarbon having 1 to 18 carbon atoms, and more preferably hydrogen, $CH_3$, or a stearyl group. $R^{13}$ may be a hydrogen atom or a (unsubstituted) monovalent hydrocarbon group having 1 to 8 carbon atoms, or may be a hydrogen atom or a (unsubstituted) monovalent hydrocarbon group having 1 to 4 carbon atoms. The remaining $R^9$ to $R^{11}$ are preferably a hydrogen atom or a monovalent hydrocarbon group having 1 to 4 carbon atoms, more preferably, one of $R^9$ to $R^{11}$ is a monovalent hydrocarbon group having 1 to 4 carbon atoms (desirably, a methyl group), and the remaining ones of $R^9$ to $R^{11}$ are a hydrogen atom.

The structural unit represented by the above Formula (III) may be a structural unit (structural unit derived from a monomer containing a polyalkylene glycol group or the like) formed when a carbon-carbon double bond of a monomer containing a polyalkylene glycol group (hydroxyl group-terminated), an alkoxypolyalkylene glycol group (alkyl group-terminated), or a phenoxypolyalkylene glycol group (aryl group-terminated) (hereinafter, referred to as the monomer containing a polyalkylene glycol group or the like) is cleaved, and examples of the monomer containing a polyalkylene glycol group or the like include polyalkylene glycol monomethacrylate, polyalkylene glycol monoacrylate, alkoxypolyalkylene glycol monomethacrylate, alkoxypolyalkylene glycol monoacrylate, phenoxypolyalkylene glycol monomethacrylate, phenoxypolyalkylene glycol monoacrylate, and the like. Examples of the monomer containing a polyalkylene glycol group other than the above also include a compound obtained by adding ethylene oxide to a hydroxyl group of 3-methyl-3-buten-1-ol (isoprenol) (for example, the average addition number of moles of ethylene oxide is 50). The monomer containing a polyalkylene glycol group or the like is preferably alkoxypolyalkylene glycol mono(meth)acrylate, polyalkylene glycol mono(meth)acrylate, or a compound obtained by adding ethylene oxide to a hydroxyl group of 3-methyl-3-buten-1-ol (isoprenol), alkoxypolyalkylene glycol monomethacrylate or alkoxypolyalkylene glycol monoacrylate is preferable, and alkoxypolyalkylene glycol monomethacrylate is more preferable.

Examples of the alkoxypolyalkylene glycol monomethacrylate include methoxypolyethylene glycol-methacrylate, octoxypolyethylene glycol-polypropylene glycol-methacrylate, lauroxypolyethylene glycol-methacrylate, and stearoxypolyethylene glycol-methacrylate, methoxypolyethylene glycol-methacrylate or stearoxypolyethylene glycol-methacrylate is preferable, and from the viewpoint of ease of availability, methoxypolyethylene glycol-methacrylate is more preferable.

Examples of the phenoxypolyalkylene glycol monomethacrylate include phenoxypolyethylene glycol-methacrylate.

Examples of the alkoxypolyalkylene glycol monoacrylate include methoxypolyethylene glycol-acrylate.

Examples of the phenoxypolyalkylene glycol monoacrylate include nonylphenoxy polypropylene glycol-acrylate and nonylphenoxy polyethylene glycol-polypropylene glycol acrylate.

Examples of the polyalkylene glycol monomethacrylate include polyethylene glycol-monomethacrylate, polypropylene glycol-monomethacrylate, polyethylene glycol-propylene glycol-monomethacrylate, polyethylene glycol-tetramethylene glycol-monomethacrylate, and propylene glycol-polybutylene glycol-monomethacrylate, and polypropylene glycol-monomethacrylate is preferable.

Examples of the polyalkylene glycol monoacrylate include polyethylene glycol-monoacrylate and polypropylene glycol-monoacrylate.

In a preferred aspect, the monomer containing a polyalkylene glycol group or the like includes at least one selected from the group consisting of methoxy polyethylene glycol-methacrylate, stearoxy polyethylene glycol-methacrylate, polypropylene glycol-monomethacrylate, and a compound obtained by adding ethylene oxide to a hydroxyl group of 3-methyl-3-buten-1-ol (isoprenol).

A preferred aspect of the polymer of the present invention preferably includes at least the structural unit represented by the above Formula (II) as the hydrophobic structural unit, and may further include the structural unit represented by the above Formula (III) because the effect of the present invention is further exhibited.

(Other structural units)

The polymer in the present invention can include a structural unit (IV) other than the structural unit described above in the balance. The other structural units are included in an amount of preferably 5 parts by weight or less (lower limit: 0 parts by weight), more preferably 3 parts by weight or less, and still more preferably 1 part by weight or less, per 100 parts by weight of the polymer.

(Configuration of polymer)

It is desirable that the polymer in the present invention includes a structural unit having an acidic functional group (preferably a structural unit having a carboxyl group) in an amount of preferably 1.0 to 90.0 parts by weight, more preferably 10.0 to 60.0 parts by weight, further preferably 20.0 to 60.0 parts by weight, and still more preferably 30.0 to 50.0 parts by weight, per 100 parts by weight of the polymer. When the acidic functional group is contained in such a range, the acid value of the polymer is easily controlled in an appropriate range.

It is desirable that the polymer in the present invention includes the structural unit (I) having an acidic functional group in an amount of preferably 1.0 to 90.0 parts by weight, more preferably 10.0 to 90.0 parts by weight, further preferably 20.0 to 60.0 parts by weight, and still more preferably 30.0 to 50.0 parts by weight, per 100 parts by weight of the polymer. It is desirable that the polymer in the present invention includes the hydrophobic structural unit (II) in an amount of preferably 10.0 to 95.0 parts by weight, more preferably 10.0 to 90.0 parts by weight, further preferably 30.0 to 70.0 parts by weight, and still more preferably 40.0 to 60.0 parts by weight, per 100 parts by weight of the polymer. It is desirable that the polymer in the present invention includes the hydrophobic structural unit (III) in an amount of preferably 1.0 to 40.0 parts by weight and more preferably 2.0 to 30.0 parts by weight, per 100 parts by weight of the polymer. It is desirable that the polymer in the present invention includes the hydrophobic structural unit in an amount of preferably 10.0 to 90.0 parts by weight, more preferably 40.0 to 90.0 parts by weight, and further preferably 40.0 to 80.0 parts by weight, per 100 parts by weight of the polymer. When the hydrophobic structural unit is included in such a range, it is easy to control the form to an emulsion form.

The polymer in the present invention preferably includes at least the structural unit (I) having an acidic functional group and the hydrophobic structural unit (II). A total content of the structural unit (I) having an acidic functional group and the hydrophobic structural unit (II) in the polymer is preferably 60 wt% or more and more preferably 65 wt% or more.

The polymer in the present invention also desirably includes and is substantially composed of the structural unit (I) and the hydrophobic structural unit (II) (for example, the polymer includes the structural units (I) and (II) in an amount of 95.0 parts by weight or more per 100 parts by weight of the total structural units). When the polymer includes and is substantially composed of the structural unit (I) and the hydrophobic structural unit (II), the structural unit (I) having an acidic functional group is included in an amount of preferably 1.0 to 80.0 parts by weight, more preferably 3.0 to 60.0 parts by weight, further preferably 5.0 to 50.0 parts by weight, and particularly preferably 10.0 to 50.0 parts by weight, per 100 parts by weight of the polymer, and the hydrophobic structural unit (II) is included in an amount of 20.0 to 99.0 parts by weight, preferably 30.0 to 98.0 parts by weight, more preferably 50.0 to 95.0 parts by weight, and particularly preferably 50.0 to 90.0 parts by weight, per 100 parts by weight of the polymer. When the polymer in the present invention includes the structural unit (I) having an acidic functional group and the hydrophobic structural unit (II) but does not include the hydrophobic structural unit (III), the structural unit (I) having an acidic functional group : the hydrophobic structural unit (II) = 1 : 99 to 80 : 20 (weight ratio) is preferable, the structural unit (I) having an acidic functional group : the hydrophobic structural unit (II) = 3 : 97 to 60 : 40 is more preferable, and the structural unit (I) having an acidic functional group : the hydrophobic structural unit (II) = 5 : 95 to 50 : 50 is further preferable.

Still another preferred aspect is a polymer including the structural unit (I) having an acidic functional group, the hydrophobic structural unit (II), and the hydrophobic structural unit (III), and more preferably a polymer including and substantially composed of these structural units (for example, including structural units (I), (II), and (III) in an amount of 95.0 parts by weight or more per 100 parts by weight of the total structural units). In the case of the polymer includes the structural unit (I) having an acidic functional group, the hydrophobic structural unit (II), and the hydrophobic structural unit (III), the structural unit (I) having an acidic functional group is included in an amount of preferably 10.0 to 90.0 parts by weight, more preferably 20.0 to 60.0 parts by weight, and further preferably 30.0 to 50.0 parts by weight, per 100 parts by weight of the polymer, the hydrophobic structural unit (II) is included in an amount of preferably 10.0 to 90.0 parts by weight, more preferably 30.0 to 70.0 parts by weight, and further preferably 40.0 to 60.0 parts by weight, per 100 parts by weight of the polymer, and the hydrophobic structural unit (III) is included in an amount of preferably 1.0 to 40.0 parts by weight and more preferably 2.0 to 30.0 parts by weight, per 100 parts by weight of the polymer.

Examples of the polymer in the present invention include a polymer obtained by polymerization using (I) acrylic acid or methacrylic acid, a polymer obtained by copolymerization using (II) alkyl (having 1 to 8 carbon atoms) acrylate in addition to (I), and a polymer obtained by copolymerization using (III) a monomer containing a polyalkylene glycol group or the like in addition to (I) and (II), and among these, the polymer obtained by copolymerization using (II) alkyl (having 1 to 8 carbon atoms) acrylate in addition to (I) and the polymer obtained by copolymerization using (III) a monomer containing a polyalkylene glycol group or the like in addition to (I) and (II) are preferable because the effect of the present invention is further exhibited.

A weight average molecular weight of the polymer in the present invention is, as a weight average molecular weight using a static light scattering method, for example, 10,000 to 10,000,000, preferably 20,000 to 8,000,000, more preferably 30,000 to 6,000,000, further preferably 40,000 to 5,000,000, particularly preferably 50,000 to 1,000,000, and most preferably 100,000 to 1,000,000 or 200,000 to 800,000.

A glass transition temperature of the polymer in the present invention is, for example, -40°C or higher, preferably -30°C or higher, more preferably -20°C or higher, and particularly preferably -10°C or higher, from the viewpoint of film formability (change in form of emulsion (disintegration of O/W)) and the like. The upper limit value of the glass transition temperature of the polymer of the present disclosure is, for example, 80°C or lower, preferably 75°C or lower, more preferably 65°C or lower, and particularly preferably 50°C or lower. The glass transition temperature can be controlled by the type and composition ratio of monomers constituting the polymer.

Note that, the glass transition temperature may a temperature determined using the glass transition temperature of a homopolymer of a monomer used as a monomer component constituting the polymer based on the Fox equation

represented by the following formula:
Formula (I):

$$1/Tg = \Sigma(Wm/Tgm)/100 \quad (I)$$

in the formula, Wm represents a content ratio (mass%) of a monomer m in a monomer component constituting the polymer, and Tgm represents a glass transition temperature (absolute temperature: K) of the homopolymer of the monomer m.

The pH of the polymer in the present invention is, for example, pH 2.0 to 6.0, more preferably pH 2.0 to 5.0, and still more preferably pH 2.0 to 4.0, as a pH of a 10.0 mass% aqueous solution or aqueous dispersion at 25.0°C. The aqueous solution or aqueous dispersion can be prepared by a known appropriate method such as dissolving or dispersing the polymer in distilled water so as to have a predetermined concentration.

(Emulsion)

In the emulsion containing the polymer in the present invention, the polymer is covered with an emulsifier and formed into particles (micellized).

Examples of the emulsion include an O/W type (oil-in-water type), a W/O type (water-in-oil type), an O/W/O type (oil-in-water-in-oil type), a W/O/W type (water-in-oil-in-water type), and the like, and an O/W type is preferable.

Examples of a dispersion medium of the emulsion include water, oil, alcohol, and the like, and water is preferably used. The solids content (polymer and emulsifier) is contained in an amount of 1.0 to 80.0 mass%, preferably 10.0 to 50.0 mass%, and more preferably 20.0 to 40.0 mass%, per the total mass of the emulsion.

The viscosity of the emulsion in the present invention is desirably, for example, 500 mPa·s or less, preferably 250 mPa·s or less, more preferably 200 mPa·s or less, further preferably 100 mPa·s or less, and particularly preferably 50 mPa·s or less as a viscosity at a shear rate of 10 $s^{-1}$ at room temperature (20 to 25°C) when the emulsion is adjusted to a concentration of 25 mass%. When the viscosity of the emulsion is equal to or less than the above upper limit, the emulsion is easily handled as an additive, and is easily mixed when being mixed with a hydraulic material immediately before a nozzle. The lower limit value of the viscosity is desirably, for example, 1 mPa·s or more and preferably 5 mPa·s or more, since it is easy to control the amount of the emulsion added immediately before a nozzle.

The pH of the emulsion is desirably 2.0 to 4.0. As a method for measuring the pH of the emulsion, a known method can be used. Examples thereof include a method in which measurement is performed in accordance with JIS Z 8802:2011 using a pH meter (LAQUA manufactured by HORIBA, Ltd.) at 25°C.

An average particle size of particles (micelles) (emulsion particles) in the emulsion in the present invention may be, for example, 30 nm or more, preferably 50 nm or more, and the like, and the upper limit value of the average particle size of the emulsion particles may be, for example, 3,000 nm or less, preferably 1,000 nm or less, and the like, and may be 500 nm or less or 200 nm or less. The average particle size of particles (micelles) in the emulsion may be 30 nm or more and 3,000 nm or less, 50 nm or more and 1,000 nm or less, 50 nm or more and 500 nm or less, or 50 nm or more and 200 nm or less. Note that, the average particle size of the emulsion particles may be a volume average particle size measured using a particle size distribution measuring instrument [Particle Sizing Systems, Inc., trade name: NICOMP Model 380] by a dynamic light scattering method.

Examples of the emulsifier used in the production of the emulsion include an anionic emulsifier, a nonionic emulsifier, a cationic emulsifier, an amphoteric emulsifier, a polymeric emulsifier, and the like, and each of these emulsifiers may be used singly or two or more kinds thereof may be used in combination. It is desirable that the emulsifier is present in the emulsion in an amount of 1.0 to 20.0 mass% and preferably 1.0 to 5.0 mass%, per the total mass of the polymer contained therein.

The emulsifier is not particularly limited, and examples thereof include an anionic emulsifier (for example, alkyl sulfates such as ammonium dodecyl sulfate and sodium dodecyl sulfate; alkyl sulfonates such as ammonium dodecyl sulfonate and sodium dodecyl sulfonate; alkylaryl sulfonates such as ammonium dodecylbenzenesulfonate and sodium dodecylnaphthalenesulfonate; polyoxyethylene alkyl sulfonates (polyoxyethylene alkyl ether sulfate); polyoxyethylene alkyl sulfates; polyoxyethylene alkyl ether sulfates; dialkylsulfosuccinic acid salts; arylsulfonic acid-formalin condensates; and fatty acid salts such as ammonium laurylate and sodium stearate, a nonionic emulsifier (for example, polyoxyethylene alkyl ether, polyoxyethylene alkyl aryl ether, a condensate of polyethylene glycol with polypropylene glycol, a sorbitan fatty acid ester, a polyoxyethylene sorbitan fatty acid ester, a fatty acid monoglyceride, and a condensate of ethylene oxide with an aliphatic amine), a cationic emulsifier (for example, dialkyldimethylammonium salts, ester type dialkylammonium ammonium salts, amide type dialkylammonium salts, dialkylimidazolinium salts, and the like), an amphoteric emulsifier (for example, alkyldimethylaminoacetic acid betaine, alkyldimethylamine oxide, alkylcarboxymethoxymethyl hydroxyethyl imidazolinium betaine, alkylamidopropyl betaine, alkylhydroxysulfobetaine, and the like), a polymeric emulsifier (for example, polyvinyl alcohol and a modified product thereof; (meth)acrylic acid-based water-soluble polymer; hydroxyethyl (meth)acrylic acid-based water-soluble polymer; hydroxypropyl (meth)acrylic acid-based water-soluble polymer; polyvinylpyrrolidone, and the like), and the like, an anionic emulsifier is preferable, and polyoxyethylene alkyl ether sulfate is more preferable.

As the emulsifier, an emulsifier having a polymerizable group, a so-called reactive emulsifier may be used.

Examples of the reactive emulsifier include propenyl-alkylsulfosuccinic acid ester salts, (meth)acrylic acid polyoxyethylene sulfonate salts, polyoxyethylene alkylpropenylphenyl ether ammonium sulfate [for example, trade name: Aqualon HS-10, Aqualon BC-10, and the like manufactured by DKS Co. Ltd.],

allyloxymethylalkyloxypolyoxyethylene sulfonate salts [for example, trade name: Aqualon KH-10 and the like manufactured by DKS Co. Ltd.], sulfonate salts of
allyloxymethylnonylphenoxyethylhydroxypolyoxyethylene [for example, trade name: ADEKA REASOAP SE-10 and the like manufactured by ADEKA CORPORATION],
allyloxymethylalkoxyethylhydroxypolyoxyethylene sulfate ester salts [for example, trade name: ADEKA REASOAP SR-10, SR-20, SR-30, and the like manufactured by ADEKA CORPORATION], bis(polyoxyethylene polycyclic phenyl ether)methacrylated sulfonate salts [for example, trade name: Antox MS-60 and the like manufactured by NIPPON NYUKAZAI CO., LTD.], allyloxymethylalkoxyethylhydroxypolyoxyethylene [for example, trade name: ADEKA REASOAP ER-10, ER-20, ER-30, ER-40, and the like manufactured by ADEKA CORPORATION], polyoxyethylene alkylpropenylphenyl ether [for example, trade name: Aqualon RN-20 and the like manufactured by DKS Co. Ltd.], allyloxymethylnonylphenoxyethylhydroxypolyoxyethylene [for example, trade name: ADEKA REASOAP NE-10, NE-20, NE-30, and the like manufactured by ADEKA CORPORATION], and the like. Each of these reactive emulsifiers may be used singly, or two or more kinds thereof may be used in combination.

For the purpose of emulsion stability and water retainability, a polyethylene glycol having an average molecular weight of 4000 or less, a polypropylene glycol having an average molecular weight of 4000 or less, or the like may be added to the emulsion. The amounts of these additives added may be 5 mass% or less or 3 mass% or less per the solids content of the emulsion.

(Method for producing emulsion)

A method for producing the emulsion containing the polymer is not particularly limited, and for example, the emulsion may be produced by emulsion polymerization of a monomer component as a raw material for the polymer in a solvent.

Examples of the solvent include aqueous solvents such as water and a solvent containing water [for example, a mixed solvent of water and an alcohol (for example, a C1-4 alcohol such as methanol or ethanol)]. Among them, the solvent preferably contains water as a main component. Here, the main component means that the content of water in the solvent is 95 mass% or more (upper limit: 100 mass%), and preferably 98 mass% or more or 99 mass% or more. The solvent may be used singly or in combination of two or more kinds thereof.

A method for emulsion polymerization of the monomer component is not particularly limited, and examples thereof include a method in which a monomer component is added dropwise to a solvent containing an emulsifier to perform polymerization, a method in which a monomer component emulsified in advance with an emulsifier is added dropwise to a solvent to perform polymerization, and the like. Specific examples of the emulsifier include those listed above.

The emulsifier may be used singly or in combination of two or more kinds thereof. The emulsifier may be a non-reactive emulsifier or a reactive emulsifier, but a non-reactive emulsifier is preferable and a non-reactive anionic emulsifier is more preferable from the viewpoint of particle stability of the emulsion.

Note that, the amount of the solvent may be appropriately set in consideration of the nonvolatile content and the like contained in the obtained emulsion.

The polymerization may be performed in the presence of a polymerization initiator.

Examples of the polymerization initiator include azo compounds such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine); persulfates such as ammonium persulfate and potassium persulfate; peroxides such as hydrogen peroxide, benzoyl peroxide, parachlorobenzoyl peroxide, lauroyl peroxide, and ammonium peroxide, and the like.

The polymerization initiator may be used singly or in combination of two or more kinds thereof.

The amount of the polymerization initiator used may be appropriately set according to the type of the polymerization initiator, and the like, and is not particularly limited, but may be, for example, 0.05 parts by weight or more, preferably 0.1 parts by weight or more, and the like, or may be, for example, 2 parts by weight or less, preferably 1 part by weight or less, and the like, per 100 parts by weight of the monomer component.

A method for adding the polymerization initiator is not particularly limited, and examples thereof include batch charging, divided charging, continuous dropwise addition, and the like.

Note that, the polymerization reaction may be performed in the presence of a reducing agent (for example, sodium bisulfite), a decomposing agent of a polymerization initiator (for example, transition metal salt such as ferrous sulfate), a chain transfer agent [for example, a compound having a thiol group (for example, tert-dodecyl mercaptan)], a pH buffering agent, a chelating agent, or the like as necessary.

The atmosphere during polymerization is not particularly limited, but may be an inert gas such as nitrogen gas from the viewpoint of polymerization efficiency and the like.

The polymerization temperature is not particularly limited, and may be, for example, 50 to 100°C and preferably 60 to 95°C. The polymerization temperature may be constant or may be changed during the polymerization reaction. The polymerization time is not particularly limited, and may be appropriately set according to the progress status of the polymerization reaction, but may be, for example, about 1 hour or more (for example, 1 to 24 hours) and preferably about 2 to 12 hours (for example, 2 to 9 hours).

(Hydraulic composition for additive manufacturing)

The hydraulic composition for additive manufacturing in the present invention may be a mortar or fresh concrete for additive manufacturing. Examples of a method for producing the additive manufacturing hydraulic composition include a production method including (a) a step of stirring a hydraulic material and water, preferably a hydraulic material, an aggregate, and water to obtain a hydraulic composition and (b) a step of adding the additive agent of the present invention to the hydraulic composition obtained in the step (a) and stirring the mixture. The step (a) and the step (b) in the production method are performed independently of each other, and the step (b) is performed after the step (a). The hydraulic material, the aggregate, and water may be sequentially added and stirred, or may be collectively added and stirred. The order of addition of the hydraulic material, the aggregate, and water is not particularly limited. Furthermore, the addition of the additive agent in the step (b) may be performed after the additive agent in an emulsion form is further diluted with water or the like. The stirring time in the step (b) is appropriately set to the time for which the mixture is uniformly mixed and which is as short as possible, and is, for example, 3 seconds to 180 seconds.

In addition, after the step (b) in the production method, it is desirable that the fresh concrete is laminated on another fresh concrete immediately (for example, 0 to 300 seconds after the step (b)).

<Additive manufactured product and additive manufacturing method>

The hydraulic composition for additive manufacturing of the present invention (hereinafter, also referred to as the hydraulic material composition) is suitable for use in additive manufacturing. Therefore, according to the present invention, there is also provided an additive manufactured product formed from the hydraulic material composition for additive manufacturing of the present invention.

Another embodiment is a method for producing an additive manufactured product using the hydraulic material composition of the above-described embodiment.

Still another embodiment is a method for producing an additive manufactured product, the method including: adding an emulsion containing a polymer having an acid value of 30 mgKOH/g or more to a composition containing a hydraulic material and water to obtain a mixture; and producing an additive manufactured product using the mixture.

The method for producing an additive manufactured product using the hydraulic material composition for additive manufacturing (additive manufacturing method) is not particularly limited, and includes, for example, a step of pressure-feeding a composition containing a hydraulic material and water (optionally containing an aggregate and other additives) to a nozzle tip of a 3D printer by compressed air, a pump, or the like, and a step of extruding the pressure-fed composition from the nozzle, adding the additive agent of the present invention from another line, further mixing to prepare a hydraulic material composition for additive manufacturing, and laminating the composition to form an additive manufactured product. Alternatively, for example, the method includes a step of pressure-feeding a composition containing a hydraulic material and water (optionally containing an aggregate and other additives) to a nozzle tip of a 3D printer by compressed air, a pump, or the like, and a step of adding the additive agent of the present invention from another line, mixing the mixture by a mixing mechanism installed in a tube at the nozzle tip, extruding the obtained composition from the nozzle, and laminating the extruded composition to form an additive manufactured product.

A nozzle (discharge portion) is usually provided at the tip of a pressure-feeding pipe of the hydraulic material composition for additive manufacturing. The diameter of the nozzle is not particularly limited, but may be appropriately set according to the size of the aggregate to be used and the width of laminating the hydraulic material composition for additive manufacturing. For example, when the size of the aggregate is 5 mm or less and the lamination width is 50 mm or less, the diameter of the nozzle is preferably 8 to 15 mm. The shape of the nozzle is not particularly limited, but examples thereof include a circular shape, an elliptical shape, a rectangular shape, a cross shape, a star shape, and the like, and a flange

may be provided around the nozzle for the purpose of imparting smoothness to the surface of the discharged hydraulic material composition.

When laminating and shaping the hydraulic material composition for additive manufacturing discharged from the nozzle, shaping using the hydraulic material composition for additive manufacturing may be performed by moving the nozzle in a vertical direction or a horizontal direction. For example, it is preferable that the nozzle is fixed to a robot arm or a portal plotter, and movement of the nozzle is controlled by computer control. It is possible to employ a method in which three-dimensional data created by a computer is cut at a predetermined thickness to create two-dimensional slice data, the hydraulic material composition for additive manufacturing is discharged from a spray nozzle while the nozzle is controlled to move in a horizontal direction such as vertical, lateral, or oblique direction based on the two-dimensional slice data, and the nozzle is moved in a perpendicular direction to repeatedly and sequentially laminate the composition for shaping. The moving speed of the nozzle is not particularly limited, and can be changed depending on the width of lamination.

Examples

The present invention will be described in more detail based on Examples, but the present invention is not limited to only these Examples. Note that, in the following description, unless otherwise specified, "parts" means parts by weight, and "%" means "mass%".

<Example 1>

A flask equipped with a dropping funnel, a stirrer, a nitrogen gas introducing tube, a thermometer, and a reflux condenser tube was charged with 453 g of deionized water and 64 g of a 20% aqueous solution of an emulsifier [trade name: HITENOL LA-10 manufactured by DKS Co. Ltd.]. In the dropping funnel, a pre-emulsion was prepared from 30 g of deionized water, 32 g of a 20% aqueous solution of an emulsifier [trade name: HITENOL LA-10 manufactured by DKS Co. Ltd.], 322 g of ethyl acrylate, 234 g of methacrylic acid, and 832 g of a 10% aqueous solution of methyl polyethylene glycol (90) monomethacrylate [trade name: BLEMMER PME-4000 manufactured by NOF CORPORATION], 73 g of the pre-emulsion was added into the flask, the temperature was raised to 72°C while nitrogen gas was slowly blown, and 2.3 g of a 5.0% aqueous solution of sodium bisulfite and 8 g of a 1.0% aqueous solution of ammonium persulfate were added into the flask to initiate polymerization. Next, the remaining part of the pre-emulsion for dropwise addition and 144 g of a 1.0% aqueous solution of ammonium persulfate were uniformly added dropwise into the flask over 120 minutes. After completion of the dropwise addition, the contents of the flask were maintained at 72°C for 60 minutes and cooled to complete the polymerization reaction. The obtained reaction liquid was cooled to room temperature and then filtered with a 300 mesh (JIS mesh; the same applies hereinafter) wire net to obtain an emulsion having a nonvolatile content (solids content) of 29.6 mass%.

The emulsion particles contained in the resin emulsion had an average particle size of 136 nm, and the glass transition temperature (Tg) of the entire emulsion particles was 14°C. The viscosity of a liquid prepared by diluting the emulsion (1) with water so as to have a concentration of 25% at a shear rate of 10 $s^{-1}$ was 33 mPa·s at room temperature.

<Examples 2 to 16>

Each emulsion of Examples 2 to 16 was obtained in the same manner as in Example 1, except that the monomer components (ethyl acrylate, methacrylic acid, methyl polyethylene glycol (90) monomethacrylate) used in Example 1, the composition ratio thereof, and the like were changed to monomer components (an acid group-containing monomer (a), a hydrophobic group monomer (b) providing a structural unit represented by Formula (II) (in the table, hydrophobic group monomer (b)), a monomer (c) containing a polyalkylene glycol group or the like (in the table, (alkoxy)polyalkylene glycol group-containing monomer (c))) shown in Tables 1 to 3 below, the composition ratio (mass ratio) (a:b:c) thereof, and the like.

Details of the polymer/emulsion of Examples 1 to 16 are shown in Tables 1 to 3 below.

Note that, in Examples 12 to 16, polyethylene glycol (PEG1000) was added to impart water retainability (1 mass% per the solids content of the emulsion, polyethylene glycol was added after obtaining an emulsion in the same manner as in Production Example of Example 1).

[Table 1]

| | | Example 1 | Example 2 | Example 3 | Example 4 | Example 5 | Example 6 |
|---|---|---|---|---|---|---|---|
| Acid group-containing monomer (a) | | MAA | MAA | MAA | MAA | MAA | MAA |
| Hydrophobic group monomer (b) | | EA | EA | EA | EA | EA | EA |
| (Alkoxy)poly-alkylene gly-col group-containing monomer (c) | Name | BLEMMER PME-4000 | BLEMMER PSE-1300 | BLEMMER PSE-1300 | BLEMMER PSE-1300 | BLEMMER PSE-1300 | BLEMMER PP-880 |
| | Polymerizable group | Methacrylate | Methacrylate | Methacrylate | Methacrylate | Methacrylate | Methacrylate |
| | Alkylene oxide (AO) | EO | EO | EO | EO | EO | PO |
| | Addition number of moles of AO (n) | 90 | 30 | 30 | 30 | 30 | 13 |
| | Terminal group | Methyl | Stearyl | Stearyl | Stearyl | Stearyl | Hydrogen |
| Composition ratio (a:b:c) | | 37:50:13 | 34:46:20 | 34:46:20 | 39:53:08 | 30:40:30 | 41:56:03 |
| Emulsifier | | HITENOL LA-10 | ADEKA REASOAP SR-10 | ADEKA REASOAP SR-10 | HITENOL LA-10 | HITENOL LA-10 | HITENOL LA-10 |
| Emulsifier amount/total monomer amount (%) | | 3 | 5 | 5 | 3 | 3 | 3 |
| Emulsion stabilizer | | - | - | - | - | - | - |
| Solids content (mass%) | | 29.6 | 29.9 | 30.1 | 30 | 30 | 29.8 |
| Particle size (nm) | | 136 | 120 | 102 | 54 | 100 | 57 |
| pH | | 2.6 | 2.8 | 2.9 | 3.1 | 2.9 | 3.1 |
| Tg (°C) | | 14 | 7 | 7 | 18 | -2 | 22 |
| Emulsion viscosity (mPa·s) | | 33 | 37 | 13 | 19 | 33 | 30 |
| Acid value (mgKOH/g) | | 231 | 213 | 213 | 242 | 186 | 260 |
| Weight average molecular weight | | 400,000 | 380,000 | 440,000 | 360,000 | 370,000 | 360,000 |

[Table 2]

| | | Example 7 | Example 8 | Example 9 | Example 10 | Example 11 |
|---|---|---|---|---|---|---|
| Acid group-containing monomer (a) | | MAA | MAA | MAA | MAA | MAA |
| Hydrophobic group monomer (b) | | EA | EA | EA | EA | EA |
| (Alkoxy)polyalkylene glycol group-containing monomer (c) | Name | BLEMMER PP-800 | BLEMMER PE-350 | BLEMMER 10PPB-500B | IPN-50 | - |
| | Polymerizable group | Methacrylate | Methacrylate | Methacrylate | 3-Methyl-3-butenyl ether | - |
| | Alkylene oxide (AO) | PO | EO | PO/BO | EO | - |
| | Addition number of moles of AO (n) | 13 | 8 | 1/6 | 50 | - |
| | Terminal group | Hydrogen | Hydrogen | Hydrogen | Hydrogen | |
| Composition ratio (a:b:c) | | 41:56:03 | 41:57:02 | 41:57:02 | 40:55:05 | 42:58:00 |
| Emulsifier | | ADEKA REASOAP SR-10 | HITENOL LA-10 | HITENOL LA-10 | HITENOL LA-10 | HITENOL LA-10 |
| Emulsifier amount/total monomer amount (%) | | 5 | 3 | 3 | 3 | 3 |
| Emulsion stabilizer | | - | - | - | - | - |
| Solids content (mass%) | | 30.1 | 29.8 | 29.7 | 29.9 | 30 |
| Particle size (nm) | | 55 | 60 | 52 | 63 | 60 |
| pH | | 3.1 | 3.1 | 2.9 | 3.2 | 3.1 |
| Tg (°C) | | 22 | 23 | 31 | 25 | 25 |
| Emulsion viscosity (mPa·s) | | 15 | 20 | 12 | 34 | 24 |
| Acid value (mgKOH/g) | | 260 | 262 | 261 | 252 | 253 |
| Weight average molecular weight | | 330,000 | 300,000 | 330,000 | 360,000 | 380,000 |

[Table 3]

| | | Example 12 | Example 13 | Example 14 | Example 15 | Example 16 |
|---|---|---|---|---|---|---|
| Acid group-containing monomer (a) | | MAA | MAA | MAA | MAA | MAA |
| Hydrophobic group monomer (b) | | EA | EA | EA | EA | EA |
| (Alkoxy)polyalkylene glycol group-containing monomer (c) | Name | - | - | - | - | - |
| | Polymerizable group | - | - | - | - | - |
| | Alkylene oxide (AO) | - | - | - | - | - |
| | Addition number of moles of AO (n) | - | - | - | - | - |
| | Terminal group | - | - | - | - | - |
| Composition ratio (a:b:c) | | 50:50:0 | 40:60:0 | 20:80:0 | 10:90:0 | 5:95:0 |

(continued)

| | Example 12 | Example 13 | Example 14 | Example 15 | Example 16 |
|---|---|---|---|---|---|
| Acid group-containing monomer (a) | MAA | MAA | MAA | MAA | MAA |
| Hydrophobic group monomer (b) | EA | EA | EA | EA | EA |
| Emulsifier | ADEKA RE-ASOAP SR-10 | ADEKA RE-ASOAP SR-10 | ADEKA RE-ASOAP SR-10 | ADEKA RE-ASOAP SR-10 | ADEKA RE-ASOAP SR-10 |
| Emulsifier amount/total monomer amount (%) | 3 | 3 | 3 | 3 | 3 |
| Emulsion stabilizer | PEG1000 | PEG1000 | PEG1000 | PEG1000 | PEG1000 |
| Solids content (mass%) | 29.8 | 30.5 | 29.9 | 30 | 30.4 |
| Particle size (nm) | 80 | 76 | 68 | 60 | 63 |
| pH | 3.1 | 3.7 | 3.7 | 3.8 | 3.9 |
| Tg (°C) | 36 | 23 | -2 | -12 | -17 |
| Emulsion viscosity (mPa·s) | 23 | 36 | 31 | 24 | 22 |
| Acid value (mgKOH/g) | 316 | 253 | 126 | 63 | 32 |
| Weight average molecular weight | 410,000 | 400,000 | 400,000 | 380,000 | 380,000 |

Note that, the product names or abbreviations listed in Tables 1 to 3 mean the following.

MAA: methacrylic acid

EA: ethyl acrylate

EO: ethylene oxide

PO: propylene oxide

BO: butylene oxide

BLEMMER (registered trademark) PME-4000: methoxypolyethylene glycol (90) monomethacrylate

BLEMMER (registered trademark) PSE-1300: stearoxy polyethylene glycol (30) monomethacrylate

BLEMMER (registered trademark) PP-800: polypropylene glycol (13) monomethacrylate

BLEMMER (registered trademark) PE-350: polyethylene glycol (8) monomethacrylate

BLEMMER (registered trademark) 10PPB-500B: propylene glycol polybutylene glycol (6) monomethacrylate

IPN-50: compound obtained by adding ethylene oxide to a hydroxyl group of 3-methyl-3-buten-1-ol (isoprenol) at an average addition number of moles of 50

HITENOL (registered trademark) LA-10: polyoxyethylene alkyl ether ammonium sulfate salt

ADEKA REASOAP (registered trademark) SR-10: ether sulfate type ammonium salt

<Particle size>

Note that, in the present specification, the average particle size of the emulsion particles means a volume average particle size measured using a particle size distribution measuring instrument [Particle Sizing Systems, Inc., trade name: NICOMP Model 380) by a dynamic light scattering method.

<Solids content (nonvolatile content)>

The amount of the solids content in the emulsion means a value obtained by weighing 1 g of the emulsion, drying the emulsion at a temperature of 110°C for 1 hour in a hot air dryer, setting the obtained residue as a nonvolatile content, and determining the amount of the solids content based on the formula: Amount of nonvolatile content in emulsion (mass%) = ([Mass of residue] ÷ [1 g of emulsion]) × 100 (%).

<Method for measuring molecular weight (1)>

The weight average molecular weight of the polymer was measured (in terms of polystyrene) using gel permeation chromatography [for example, product number: HLC-8120GPC manufactured by Tosoh Corporation, column: TSKgel G-5000HXL and TSKgelGMHXL-L are used in series].

<pH>

The pH was measured in accordance with JIS Z 8802:2011 using a pH meter (LAQUA manufactured by HORIBA, Ltd.) at 25°C.

<Tg>

In the present specification, the glass transition temperature of a resin means a temperature determined using the glass transition temperature of a homopolymer of a monomer used as a monomer component constituting the resin based on the Fox equation represented by the following formula:

$$1/Tg = \Sigma(Wm/Tgm)/100$$

in the formula, Wm represents a content ratio (mass%) of a monomer m in a monomer component constituting the resin, and Tgm represents a glass transition temperature (absolute temperature: K) of the homopolymer of the monomer m.

In the present specification, unless otherwise specified, the glass transition temperature of the polymer constituting the emulsion particles means a glass transition temperature determined based on the above-described Fox equation.

The glass transition temperature of the entire emulsion particles having a plurality of resin layers obtained by multi-stage emulsion polymerization or the like means a glass transition temperature determined based on the above-described Fox equation using the glass transition temperature of homopolymers of monomers used for all monomer components used as raw materials of all resin layers used in multi-stage emulsion polymerization. Note that, in the case of a monomer having an unknown glass transition temperature, such as a special monomer or a polyfunctional monomer, when the total amount of monomers having an unknown glass transition temperature in the monomer component is 10 mass% or less in terms of mass fraction, the glass transition temperature is determined using only monomers having a known glass transition temperature. When the total amount of monomers having an unknown glass transition temperature in the monomer component exceeds 10 mass%, the glass transition temperature of the resin is determined by differential scanning calorimetry (DSC), differential calorimetry (DTA), thermomechanical analysis (TMA), or the like.

The glass transition temperature is, for example, 105°C for a homopolymer of methyl methacrylate, -70°C for a homopolymer of 2-ethylhexyl acrylate, -24°C for a homopolymer of ethyl acrylate, -56°C for a homopolymer of n-butyl acrylate, 83°C for a homopolymer of cyclohexyl methacrylate, 107°C for a homopolymer of tert-butyl methacrylate, 55°C for a homopolymer of 2-hydroxyethyl methacrylate, 95°C for a homopolymer of acrylic acid, 130°C for a homopolymer of methacrylic acid, and 100°C for a homopolymer of styrene.

<Acid value>

The acid value (mgKOH/g) per 1 g of the solids content of the resin was measured according to JIS K 0070:1992 using an automatic titrator (trade name: COM-555, manufactured by HIRANUMA Co., Ltd.).

<Production of polymer for dispersant>

In a glass reaction vessel equipped with a thermometer, a stirrer, a dropping funnel, a nitrogen inlet tube, and a reflux condenser, 21.6 g of ion-exchanged water and 206.4 g of unsaturated polyalkylene glycol ether (IPN-50) obtained by adding 50 moles of ethylene oxide (EO) on average to isoprenol were charged, the temperature was raised to 60°C, and 15.6 g of a 1% hydrogen peroxide aqueous solution was added thereto. Next, an aqueous solution obtained by diluting

42.8 g of acrylic acid with 42.8 g of ion-exchanged water was added dropwise over 3 hours. At the same time, an aqueous solution obtained by dissolving 0.1 g of L-ascorbic acid and 2.0 g of 3-mercaptopropionic acid in 358.4 g of ion-exchanged water was added dropwise over 3.5 hours. After completion of the dropwise addition, stirring was continued for 1 hour, and the polymerization reaction was completed. Thereafter, the reaction solution was adjusted to pH 6 using a 30% aqueous solution of sodium hydroxide at a temperature equal to or lower than the polymerization reaction temperature, thereby obtaining an aqueous solution of a polymer for a dispersant having a weight average molecular weight (Mw) of 18000. Note that, the weight average molecular weight of the polymer for a dispersant was measured by the following method for measuring a molecular weight (2).

<Method for measuring molecular weight (2)>

The weight average molecular weight of the polymer for a dispersant was measured by performing GPC (gel permeation chromatography) under the following conditions.

- Device name: alliance e2695 manufactured by Waters
- Column used: Each one of TSK guard column $\alpha$ + TSKgel $\alpha$-5000 + TSKgel $\alpha$-4000 + TSKgel $\alpha$-3000 manufactured by Tosoh Corporation was connected and used.
- Eluent: A solution prepared by mixing 2000 g of acetonitrile with a solution prepared by dissolving sodium dihydrogen phosphate2$H_2O$: 62.4 g and disodium hydrogen phosphate -12$H_2O$: 143.3 g in 7794.3 g of ion-exchanged water was used.
- Detector: differential refractometer (RI) detector

(Waters 2414)

Standard substance for calibration curve creation: polyethylene oxide (Mw 255000, 200000, 107000, 72500, 44900, 31440, 21300, 11840, 6450, 4020, 1470) manufactured by GL Sciences Inc.

Calibration curve: created by a three-degree equation from the Mw value of the above-described standard substance and the elution time.

- Loading amount

sample and standard material: 100 $\mu$L of a solution dissolved in the above-described eluent was injected so that the polymer concentration was 1.0 volt.

- Flow rate: 0.5 ml/min
- Column temperature: 40°C
- Measurement time: 90 minutes

[Test Example 1] Paste flow test

A test was performed in accordance with the contents of JIS R 5201:2015 by the following method.

A solution (A) was prepared by mixing 23.4 g of a 10% aqueous solution of a dispersant polymer which had been diluted with water and adjusted in advance, 11.7 g of 1% water-dispersed ADEKA NOL LG-299 (manufactured by ADEKA CORPORATION) as an antifoaming agent, and 198.9 g of water. To an oven of Hobart mixer (Model No.: N-50; manufactured by Hobart Corporation), 900 g of ordinary portland cement (manufactured by TAIHEIYO CEMENT CORPORATION) was added, the solution (A) was then added, and immediately kneading with a mixer was started at a low speed. The time from the addition of the solution (A) is hereinafter referred to as the elapsed time after pouring.

After 30 seconds from the start of the kneading of the mixer, 1350 g of ISO sand was added, and then a certain amount of sand was added for 30 seconds. Next, the kneading was changed to high speed, and the kneading was continued for 30 seconds. Then, a pause was made for 90 seconds, the oven was removed during the first 60 seconds of the pause, and the mortar attached to the oven and a paddle was scraped off using the paddle and a spatula. After the above-described pause was completed, the mixture was kneaded at high speed for 60 seconds.

After the kneading, a liquid (the additive agent was adjusted so as to be 66.6 g in total in combination with the

weight of water) obtained by diluting a predetermined amount (described in mass% per cement amount in Table 4 below) of the additive agent (any emulsion of Examples 1 to 16 or a curing accelerator (aluminum sulfate) of Comparative Example 2) with water was further added, and the mixture was further stirred at low speed for 30 seconds to prepare a mortar (in Comparative Example 1, since the predetermined amount of the additive agent described above is not added, only 66.6 g of water is added).

The flow value of each mortar kneaded as described above was measured using a frustoconical flow cone (lower diameter: 100 mm, upper diameter: 70 mm, height: 60 mm). Detailed conditions at the time of measuring the flow value are as described below.

Cone installation: The cone was visually checked to be free from dirt, scratches, and dents before use. The inner surface of the cone and the upper surface of the flow table were wiped in advance with a wet cloth or the like to be in a clean state.

Flow table: A flow table described in JIS R 5201:2015 was used.

Sample filling method: The cone was placed on a horizontally placed flat plate, and a sample was packed in two layers in approximately equal amounts. Each layer was punched with a tamping rod and then uniformly butted 25 times without bias. The penetration depth of the tamping rod at the time of penetrating each layer was set to a degree approximately reaching the front layer. Finally, if necessary, the deficiency was supplemented and the surface was levelled out. Immediately, the cone was removed in the perpendicular direction, and a falling motion was given a total of 15 times at a frequency of once per 1 second, the length in the direction recognized as the maximum and the length in the direction perpendicular thereto after the mortar spread were measured, and an average value was recorded as a flow (mm).

The results of the flow test are described in Table 4 below.

[Table 4]

| | Addition amount (wt%/C) | Flow (mm) |
|---|---|---|
| Example 1 | 0.1 | 102 |
| Example 2 | 0.1 | 104 |
| Example 3 | 0.1 | 101 |
| Example 4 | 0.1 | 103 |
| Example 5 | 0.1 | 101 |
| Example 6 | 0.1 | 103 |
| Example 7 | 0.1 | 105 |
| Example 8 | 0.1 | 102 |
| Example 9 | 0.1 | 105 |
| Example 10 | 0.1 | 103 |
| Example 11 | 0.1 | 102 |
| Example 12 | 0.1 | 105 |
| Example 13 | 0.1 | 105 |
| Example 14 | 0.1 | 106 |
| Example 15 | 0.1 | 108 |
| Example 16 | 0.1 | 136 |
| Comparative Example 1: not added | - | 189 |
| Comparative Example 2: aluminum sulfate | 2.0 | 103 |

[Test Example 2] Penetration resistance test

A mortar was kneaded by the method described in the above-described flow test, and then a penetration resistance test of the kneaded product was performed in accordance with JIS R 5201:2015 (Example 1 and Comparative Example 2). A penetration resistance value ($N/mm^2$) at each elapsed time (min) after pouring of the solution into the mortar (time point at which the solution (A) was added) was measured.

The results of the penetration resistance test are described in Table 5 below.

[Table 5]

| | Example 1 | Comparative Example 2 |
|---|---|---|
| Elapsed time (min) after pouring | Penetration resistance value ($N/mm^2$) | |
| 8 | 0.28 | 1.36 |
| 13 | 0.32 | 2.80 |
| 20 | 0.48 | 6.36 |
| 30 | 0.64 | 10.96 |
| 60 | 1. 04 | 30.00 |
| 90 | 1. 68 | 39.08 |
| 120 | 1.96 | |
| 180 | 3.76 | |
| 240 | 6.32 | |
| 300 | 12.28 | |
| 360 | 16.64 | |

From the results in Table 4, it was confirmed that Examples 1 to 16 (emulsion containing a polymer having an acid value in a specific range) according to the present invention remarkably reduced the flow value of the mortar as compared with Comparative Example 1. In Examples 1 to 15 in which the acid value was 63 KOH/g or more, it was confirmed that the flow value of the mortar was significantly reduced as compared with Example 16, and it was further confirmed that the flow value of the mortar was reduced to the same extent as Comparative Example 2 (curing accelerator: aluminum sulfate) in which the addition amount was greatly larger.

Therefore, it can be understood that the present invention is excellent in the effect of improving the laminatability of a hydraulic composition for additive manufacturing.

From the results in Table 5, it was confirmed that in Example 1 according to the present invention, an increase in penetration resistance value after pouring was remarkably gentle as compared with Comparative Example 2, and it was shown that the time until the mortar is cured can be sufficiently maintained.

When the time until the mortar is cured is too short, the mortar is cured before the next layer is discharged at the time of performing additive manufacturing, and the adhesion between the layer for which discharge has been completed and the newly laminated layer decreases, leading to a decrease in strength as a structure, which is a problem.

Therefore, it is highly expected that the present invention does not lower the adhesion between the layers and the strength of the structure by sufficiently keeping the time until the mortar is cured, and from this point, it can be understood that the present invention is excellent in the effect of improving the laminatability of an additive manufacturing hydraulic composition.

The present application is based on Japanese Patent Application No. 2022-29627 filed on February 28, 2022, the disclosure content of which is incorporated herein by reference in its entirety.

## Claims

1. An additive agent used in a hydraulic composition for an additive manufacturing, comprising an emulsion containing a polymer having an acid value of 30 mgKOH/g or more.

2. The additive agent according to claim 1, comprising an emulsion containing a polymer having an acid value of 100 to 400 mgKOH/g.

3. The additive agent according to claim 1 or 2, wherein the polymer includes a structural unit having a carboxyl group.

4. The additive agent according to claim 3, wherein the structural unit having the carboxyl group is included in an amount of 10.0 to 60.0 parts by weight per 100 parts by weight of the polymer.

5. The additive agent according to claim 3 or 4, wherein the polymer is a copolymer further having a hydrophobic structural unit.

**6.** The additive agent according to claim 5, wherein the hydrophobic structural unit is included in an amount of 40.0 to 90.0 parts by weight per 100 parts by weight of the polymer.

**7.** The additive agent according to any one of claims 1 to 6, wherein a viscosity at a shear rate of 10 $s^{-1}$ at room temperature when the emulsion is adjusted to a concentration of 25 mass% is 250 mPa·s or less.

**8.** A hydraulic composition for an additive manufacturing, comprising the additive agent according to any one of claims 1 to 7 and a hydraulic composition.

**9.** A method for producing a hydraulic composition for an additive manufacturing, the method comprising:

(a) a step of stirring a hydraulic material, an aggregate, and water to obtain a hydraulic composition; and
(b) a step of adding and stirring the additive agent according to any one of claims 1 to 7 after the step (a).

**10.** An additive manufacturing method using a hydraulic composition added with the additive agent according to any one of claims 1 to 7.

## INTERNATIONAL SEARCH REPORT

International application No. **PCT/JP2023/006248**

**A. CLASSIFICATION OF SUBJECT MATTER**

***C08L 101/08***(2006.01)i; ***B28B 1/30***(2006.01)i; ***C04B 24/26***(2006.01)i; ***C04B 28/02***(2006.01)i; ***B33Y 70/10***(2020.01)i
FI: C04B24/26 F; B33Y70/10; C04B28/02; B28B1/30; C08L101/08

According to International Patent Classification (IPC) or to both national classification and IPC

**B. FIELDS SEARCHED**

Minimum documentation searched (classification system followed by classification symbols)

C08L101/08; B28B1/30; C04B7/00-28/36; B33Y10/00,B33Y70/00-B33Y70/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 10-235623 A (OHBAYASHI CORP.) 08 September 1998 (1998-09-08) claims, paragraphs [0026], [0027] | 1-10 |
| Y | JP 60-210555 A (SANYO CHEMICAL INDUSTRIES, LTD.) 23 October 1985 (1985-10-23) claims, p. 3, lower right column, lines 6-9, p. 5, upper left column, lines 7-10, lower left column, line 8 to p. 6, upper left column, line 4 | 1-10 |
| Y | JP 2021-133667 A (UBE INDUSTRIES, LTD.) 13 September 2021 (2021-09-13) claims, paragraph [0024] | 1-10 |
| Y | JP 2019-26506 A (NIPPON SHOKUBAI CO., LTD.) 21 February 2019 (2019-02-21) paragraphs [0008], [0010], table 1 | 1-10 |
| A | JP 2015-123684 A (MIMAKI ENGINEERING CO., LTD.) 06 July 2015 (2015-07-06) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 March 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/006248**

| Patent document cited in search report | | | Publication date (day/month/year) | Patent family member(s) | Publication date (day/month/year) |
|---|---|---|---|---|---|
| JP | 10-235623 | A | 08 September 1998 | (Family: none) | |
| JP | 60-210555 | A | 23 October 1985 | (Family: none) | |
| JP | 2021-133667 | A | 13 September 2021 | (Family: none) | |
| JP | 2019-26506 | A | 21 February 2019 | (Family: none) | |
| JP | 2015-123684 | A | 06 July 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10235623 A
- US 8211226 B
- JP 2008247677 A
- JP 2006290694 A
- JP 2021133667 A
- JP S5918338 B
- JP H7223852 A
- JP H10236858 A
- JP 2001220417 A
- JP 2002121055 A
- JP 2002121056 A
- JP 2006052381 A
- JP 2008517080 A
- JP 2022029627 A